# EUROPÄISCHE PATENTSCHRIFT

(11) **EP 0 585 790 B1**
(45) Veröffentlichungstag und Bekanntmachung des Hinweises auf die Patenterteilung: **11.12.1996**
(21) Anmeldenummer: 93113543.8
(22) Anmeldetag: 25.08.1993
(51) Int. Cl.: C04B 28/26, C04B 22/04

(54) **Putzmischung mit Quelleffekt**
Swellable plastic composition
Composition d'enduit gonflante

(30) Priorität: 03.09.1992 DE 4229390
(43) Veröffentlichungstag der Anmeldung: 09.03.1994
(73) Patentinhaber: KOCH MARMORIT GmbH, 79283 Bollschweil (DE)
(72) Erfinder: Benz, Theophil, D-79238 Ehrenkirchen (DE); Tank, Volker, D-79283 Bollschweil (DE)
(74) Vertreter: Werner, Hans-Karsten, Dr.Dipl.-Chem.

(56) Entgegenhaltungen:
- EP-A- 0 486 810
- AU-B- 525 030
- CHEMICAL ABSTRACTS, vol. 97, no. 12, 20. September 1982, Columbus, Ohio, US; abstract no. 97260y,
- CHEMICAL ABSTRACTS, vol. 103, no. 12, 23. September 1985, Columbus, Ohio, US; abstract no. 92045q,
- CHEMICAL ABSTRACTS, vol. 105, no. 8, 25. August 1986, Columbus, Ohio, US; abstract no. 65360y,

## Beschreibung

Gegenstand der vorliegenden Erfindung ist eine Putzmischung mit Quelleffekt enthaltend Bindemittel, Zuschläge und übliche Zusatzmittel sowie 0,1 bis 1,5 kg/t Aluminiumpulver und Alkali. Diese Putzmischung quillt nach dem Anrühren und weist nach dem Abbinden eine hohe Porosität auf.

Es ist bekannt, Gasbeton herzustellen, indem man Aluminiumpulver zumischt, welches durch Wasserstoffentwicklung im stark alkalischen Medium die Quellung bewirkt. Es handelt sich dabei um eine sehr rasche Reaktion, die etwa eine 50 %ige Vergrößerung des ursprünglichen Volumens bewirkt. Es ist weiterhin bekannt, Aluminiumpulver als Einpreßhilfe für Verpreßmörtel, beispielsweise in Spannkanälen einzusetzen, wobei das Volumen um etwa 10 % zunimmt.

Aus der DE-A-22 39 500 ist bekannt, poröse Formkörper aus Kalkmörtel herzustellen, wobei durch Zusatz von geringen Mengen eines Korrosionsschutzmittels die Gasentwicklung verzögert und die Härtung der Formkörper verbessert wird.

Aus der DE-C-40 35 826 der Anmelderin ist bekannt, quellende Putzmischungen herzustellen, welche die Gasentwicklung durch 0,1 bis 1,5 kg/t Aluminiumpulver und 5,0 bis 70,0 kg/t Branntkalk herbeiführen, wobei die Gasentwicklung durch Phosphatverzögerer und die innere Aufheizung des Gemisches gesteuert wird.

Diese Mischungen haben sich zwar sehr bewährt, jedoch wirken die Produkte wegen der extrem starken Alkalität und der wasserentziehenden Wirkung des Branntkalks auf der Haut reizend. Weiterhin kann es durch die Temperaturerhöhung zu einer starken Wasserabgabe kommen, wobei der Putz dann verdurstet. Die Gasentwicklung wird dabei gesteuert durch die innere Aufheizung des Gemisches einerseits, und die kurzfristige Verzögerung durch Phosphate andererseits.

Die vorliegende Erfindung hat sich somit die Aufgabe gestellt, eine verbesserte Putzmischung mit Quelleffekt zur Verfügung zu stellen, welche weniger hautreizend ist und nicht so sehr dazu neigt zu verdursten. Die Putzmischung soll trotzdem gut steuerbar sein.

Diese Aufgabe kann überraschend einfach dadurch gelöst werden, daß die Putzmischung enthaltend Bindemittel, Zuschläge und übliche Zusatzmittel sowie 0,1 bis 1,5 kg/t Aluminiumpulver und Alkali, als Alkali 1 bis 30 kg/t pulverisiertes Natrium- und/oder Kaliumwasserglas und 0 bis 30 kg/t Branntkalk enthält.

Überraschenderweise hat sich herausgestellt, daß durch den teilweisen oder vollständigen Ersatz des Branntkalks durch Wasserglas nicht nur die hautätzende Wirkung verringert wird, sondern vor allem auf den Zusatz von Phosphat als Verzögerer völlig verzichtet werden kann. Weiterhin erfolgt die Gasentwicklung bei niedrigeren Temperaturen, so daß nur noch in der kälteren Jahreszeit eine innere Aufheizung notwendig ist. So kann insbesondere in den Sommermonaten auf den Einsatz von Branntkalk völlig verzichtet werden, während man in den Wintermonaten meistens nur noch 10 bis 20 kg Branntkalk zuzusetzen braucht. Bei den niedrigeren Temperaturen des Putzes verdampft weniger Wasser, so daß es nicht mehr zu dem gelegentlich beobachteten Verdursten kommt. Der Zusatz von Wasserglas erhöht somit die Gasentwicklung aus dem Aluminiumpulver bei niedrigeren Temperaturen. Dennoch bewirken die Wassergläser anfangs eine gewisse Verzögerung.

Als Wassergläser kommen die handelsüblichen Natrium- und/oder Kaliumwassergläser in Frage, welche ganz überwiegend aus Natrium- und/oder Kaliumsilikat bestehen und beim Anrühren mit Wasser freies Alkali bilden, welches zur Umsetzung mit dem Aluminiumpulver zur Verfügung steht.

Als Bindemittel werden vorzugsweise Gemische aus Portlandzement und Kalkhydrat verwendet. Derartige Bindemittel sind bisher vor allem für festere Putze eingesetzt worden. Die erfindungsgemäße Putzmischung ist zwar weniger fest, jedoch ist dies nur auf den Quellvorgang zurückzuführen. Als Zuschläge werden vorzugsweise Kalksteinmehle und Kalkstein- oder Quarzkörnungen mit einer Korngröße von 0 bis 1,5 mm verwendet. Gröbere Körnungen, wie sie insbesondere für bisher übliche Putzmischungen verwendet wurden, sind weniger geeignet. Sie neigen beim Verarbeiten und Verziehen zum Aufrollen und Aufreißen. Umgekehrt wurden bei Putzmischungen gröberkörnige Zuschlagstoffe bevorzugt, da derartige Putze dann weniger zur Rißbildung neigen. Die Gefahr der Rißbildung ist bei den erfindungsgemäßen Putzen sehr viel geringer, da die gequollene und abgebundene poröse Putzschicht eine relativ hohe Elastizität aufweist.

Als Zusatzmittel können alle üblichen normalen Zusatzmittel zur Anwendung kommen, und zwar auch in den üblichen Mengen. Zu diesen Zusatzmitteln zählen insbesondere Celluloseether, Luftporenbildner, Stärkeether, Hydrophobierungsmittel, welche insgesamt die Verarbeitbarkeit und Haltbarkeit des fertigen Putzes positiv beeinflussen.

Als Aluminiumpulver können insbesondere die für die Gasbeton-Herstellung verwendbaren Qualitäten verwendet werden. Die zugesetzte Menge ist vor allem von der gewünschten Quellwirkung abhängig. Ein Einsatz unter 0,1 kg/t bewirkt eine zu geringe Quellung. Mengen über 1,5 kg/t führen zu schlechter Verarbeitbarkeit und einer zu lockeren Struktur des fertigen Putzes. Besonders bevorzugt sind daher Mengen zwischen 0,2 und 0,6 kg/t.

Die Menge an Branntkalk liegt für Standardmischungen im Bereich zwischen 0 und 20 kg/t. Für Putzmischungen, die bei höheren Temperaturen als 20°C verarbeitet werden sollen, kann auf den Zusatz völlig verzichtet werden. Für die Putzmischung, die bei Temperaturen von 4 bis 8°C verarbeitet werden sollen, kann die Menge an Branntkalk 10 bis 20 kg/t und bei langanhaltenden tieferen Temperaturen bis zu 30 kg/t betragen. Optimale Ergebnisse erhält man dann, wenn es gelingt, die Materialtemperatur nach dem Anrühren 60 bis 90 Minuten auf 15 bis 20°C zu halten. Nach dieser Zeit ist das Gemisch meist schon soweit abgebunden, daß ein weiteres Quellen nicht mehr stattfindet.

Die folgenden Standardrezepturen haben sich inzwischen hervorragend bewährt:

| Komponente | Massenteile |
|---|---|
| Kalksteinmehl | 50 - 150 |
| Kalkstein- oder Quarzkörnung 0,1 - 0,3 mm | 80 - 180 |
| Kalkstein- oder Quarzkörnung 0,3 - 0,6 mm | 80 - 180 |
| Kalkstein- oder Quarzkörnung 0,6 - 1,0 mm | 150 - 250 |
| Kalkstein- oder Quarzkörnung 1,0 - 1,5 mm | 150 - 280 |
| Kalkhydrat | 30 - 80 |
| Portlandzement | 100 - 200 |
| Celluloseether | 1,2 - 2,5 |
| Luftporenbildner | 0 - 0,3 |
| Stärkeether | 0,05 - 0,3 |
| Hydrophobierungsmittel | 1 - 3 |
| Alu-Pulver | 0,1 - 1,5 |
| Branntkalk | 0 - 30 |
| Natrium- und/oder Kaliumwasserglas | 1 - 30 |

Die Gesamtmischung ergibt jeweils 1.000 Massenteile.

## Patentansprüche

1. Putzmischung mit Quelleffekt enthaltend Bindemittel, Zuschläge und übliche Zusatzmittel, sowie 0,1 bis 1,5 kg/t Aluminiumpulver und Alkali, dadurch gekennzeichnet, daß sie als Alkali
1 bis 30 kg/t pulverisiertes Natrium- und/oder Kaliumwasserglas und
0 bis 30 kg/t Branntkalk
enthält.

2. Putzmischung gemäß Anspruch 1, dadurch gekennzeichnet, daß als Bindemittel ein Gemisch aus Portlandzement und Kalkhydrat verwendet wird.

3. Putzmischung gemäß Anspruch 1 oder 2, dadurch gekennzeichnet, daß Zuschläge mit einer Körnung im Bereich von 0 bis 1,5 mm verwendet werden.

4. Putzmischung gemäß einem der Ansprüche 1 bis 3, dadurch gekennzeichnet, daß als Branntkalk weich gebrannter Kalk verwendet wird.

5. Putzmischung gemäß einem der Ansprüche 1 bis 4, dadurch gekennzeichnet, daß die zusätzlichen Komponenten Aluminiumpulver, Wasserglas und Branntkalk so aufeinander abgestimmt sind, daß die mit Wasser angerührte und flächig aufgetragene Putzmischung bei den jeweiligen Außentemperaturen 50 bis 100 Minuten Temperaturen zwischen 15 bis 20°C aufweist und während dieser Zeit quillt bevor sie abbindet.

## Claims

1. A plastering composition having a swelling property and containing binder(s), aggregates and conventional additives, as well as from 0.1 to 1.5 kg/t of aluminium powder and alkali, characterized by containing
from 1 to 30 kg/t of powderized sodium and/or potassium silicate, and
from 0 to 30 kg/t of burned lime
as said alkali.

2. The plastering composition according to claim 1, characterized in that a mixture of Portland cement and lime hydrate is used as said binder.

3. The plastering composition according to claim 1 or 2, characterized in that aggregates are used having a grain size in the range of from 0 to 1.5 mm.

4. The plastering composition according to, any of claims 1 to 3, characterized in that soft burned lime is used as said burned lime.

5. The plastering composition according to any of claims 1 to 4, characterized in that the additional components, aluminium powder, silicate and burned lime, are adjusted to one another such that said plastering composition, when mixed with water and two-dimensionally applied, will exhibit temperatures of from 15 to 20°C for a period of from 50 to 100 minutes at the respective outdoor temperatures and will swell within this period before setting.

## Revendications

1. Mélange pour enduit à effet expansif contenant des liants, des particules et des adjuvants habituels, ainsi que 0,1 à 1,5 kg/t de poudre d'aluminium et d'alcalis, caractérisé en ce que le mélange contient à titre d'alcalis
1 à 30 kg/t de silicate de sodium et/ou de silicate de potassium pulvérisé et
0 à 30 kg/t de chaux vive.

2. Mélange pour enduit selon la revendication 1, caractérisé en ce que l'on utilise à titre de liant un mélange de ciment Portland et de la chaux éteinte.

3. Mélange pour enduit selon la revendication 1 ou 2, caractérisé en ce que l'on utilise des particules d'une granulométrie de 0 à 1,5 mm.

4. Mélange pour enduit selon l'une des revendications 1 à 3, caractérisé en ce que la chaux vive utilisée est une chaux faiblement calcinée.

5. Mélange pour enduit selon l'une des revendications 1 à 4, caractérisé en ce que les composants supplémentaires que sont la poudre d'aluminium, le silicate et la chaux vive, sont dosés de manière telle les uns par rapport aux autres, qu'en fonction des températures ambiantes le mélange pour enduit additionné d'eau et étendu sur une surface atteint des températures de 15 à 20 °C dans un laps de temps de 50 à 100 minutes et qu'il s'expanse pendant ce laps de temps avant de prendre.
